(19) **Europäisches Patentamt**
**European Patent Office**
**Office européen des brevets**

(11) **EP 4 704 281 A1**

(12) **EUROPEAN PATENT APPLICATION**

(43) Date of publication:
04.03.2026 Bulletin 2026/10

(21) Application number: 24196663.9

(22) Date of filing: 27.08.2024

(51) International Patent Classification (IPC):
*H02J 3/00* (2026.01)   *H02J 3/38* (2026.01)
*H02J 13/00* (2026.01)

(52) Cooperative Patent Classification (CPC):
**H02J 3/0012; H02J 3/381; H02J 13/12;**
H02J 2103/30

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Aktiengesellschaft**
**80333 München (DE)**

(72) Inventors:
• **Buchta, Eva**
**91056 Erlangen (DE)**

• **Duckheim, Mathias**
**91052 Erlangen (DE)**
• **Heuer, Christian**
**21220 Seevetal (DE)**
• **Loukrezis, Dimitrios**
**80809 München (DE)**
• **Ludwig, Christoph Ernst**
**85737 Ismaning (DE)**
• **Metzger, Michael**
**85570 Markt Schwaben (DE)**
• **Stursberg, Paul**
**80469 München (DE)**

(74) Representative: **Siemens Patent Attorneys**
**Postfach 22 16 34**
**80506 München (DE)**

(54) **COMPUTER-IMPLEMENTED METHOD, SYSTEM AND COMPUTER PROGRAM PRODUCT FOR OPTIMIZING AN ELECTRIC POWER DISTRIBUTION NETWORK**

(57)    The present disclosure provides a computer-implemented method for optimizing an electric power distribution network, characterized in that the method comprises:

applying, by a probability module, a probabilistic load and feed-in forecast to a grid model to generate a probabilistic state parameter forecast, and

performing, by a reliability module, a reliability analysis on the probabilistic state parameter forecast to determine a failure probability, and

optimizing, by a control module, values for control parameters of the electric power distribution network to achieve an operational objective.

The disclosure also relates to a corresponding system and computer program product for optimizing an electric power distribution network.

Figure 1

**Description**

The present invention relates to a computer-implemented method for optimizing an electric power distribution network according to claim 1, a system for optimizing an electric power distribution network according to claim 12, and a computer program product according to claim 16.kk

The first generation of grid control system software for the control center was developed in the 1970s. It uses server computers specially configured for this application, which were installed onsite in the computer room of the network operator's control center. The server computers were typically redundantly designed to ensure availability of the grid control system functionality for more than 99.999% of the time. In some cases, even today, the redundant server computers are installed at different locations to make the overall system even more resistant and, for example, to ensure control center functionality through the server computers at the other location even in the event of disasters such as earthquakes or fire at one location.

From the product brochure "Intelligent control center technology - Spectrum Power", Siemens AG 2017, Article-No. EMDG-B90019-00-7600, software for a so-called "Supervisory Control and Data Acquisition (SCADA)" system for use in a control center is known. SCADA systems have long been known for controlling and monitoring energy networks (Wikipedia permanent link: https://en.wikipedia.org/w/index.php?title=SCADA&oldid=858433181). Measurement values from sensors, for example from voltage measuring devices and current measuring devices in the energy network, are aggregated and transmitted to the control center. Control commands are sent to the energy network to control circuit breakers, tap changers of transformers, disconnectors and other controllable equipment in the energy network, as well as to control energy generators such as power plants. These control commands are received and processed by "Remote Terminal Units" (RTUs), "programmable logic controllers" (PLCs) and "intelligent electronic devices" (IEDs) to control the circuit breakers, disconnectors, etc. In the control center, a local data center is often provided on which the control center software, such as Spectrum Power, runs. The control center software is usually operated in a central computer arrangement, which can be designed as a data center with processors, data storage devices and screens. The term "central" refers to the fact that all measurement data from the energy network and all control commands for the energy network are processed centrally. Technicians are kept on standby around the clock in the control center to monitor the SCADA displays of the current operating status of the energy network and to take countermeasures such as shutting down a network section in the event of a fault.

A partial or complete design of the computer arrangement or the control center software as a cloud application, i.e. a server arrangement with decentrally distributed resources for data processing and data storage, which are connected via a data network such as the Internet, can also be carried out.

As a side effect of the ever-increasing spread of distributed energy generation, for example through photovoltaic systems or wind turbines, the determination of a system state of the energy network is made more difficult by the ever-increasing number of local energy generators feeding into the low and medium voltage network. In particular, recording the current state in the lower voltage levels (medium and low voltage) is becoming increasingly important because the networks in the lower voltage levels are more heavily loaded by the decentralized feed-ins.

Electric power distribution is the final stage in the delivery of electricity, traditionally comprising the delivery of electricity to households and small-scale industrial consumers. However, in recent years, the pool of energy resources connected to the distribution grid (distributed energy resources, DERs) has been substantially diversified, with further diversification underway. This diversification is owed predominantly to the integration of distributed power generation (e.g., renewable energy sources like solar PV) and of charging points for electric vehicles into the power distribution network, as well as due to heating electrification with the integration of heat pumps.

All these factors make it more difficult not only to determine the current network status but also to predict the future network status.

The dependence on weather influences is increasing because, for example, solar cells are strongly influenced by cloud cover and wind turbines by wind strength. These problems also have an impact on the next higher voltage level - a high-voltage energy transmission network - which is therefore more difficult to control and predict.

The operating personnel in a control center for an electrical energy network require software for evaluating measurement data so that, for example, a network state can be determined by means of a network analysis. For the typically meshed transmission network of the high-voltage or medium-voltage level, measurement data such as voltage, current, active power, reactive power and, if necessary, phase angle can usually be recorded for a large number of measuring points. Often the measurement data is even redundant, so that a high accuracy and reliability of the measurement data is achieved.

In the distribution network, on the other hand, which is typically assigned to the low-voltage level and partly also to the medium-voltage level, independent sub-networks with a radial structure are often provided, which are not comprehensively monitored with measuring devices. However, additional data from e.g. intelligent electricity meters (i.e. devices that can be read remotely via the Internet) can be taken into account.

Furthermore, software for data acquisition in a distribution network and for controlling this distribution network is known from the product brochure "Spectrum Power 7 v2.30 SP2 Distribution Network Applications " (hereinafter referred to as DNA), Siemens AG 2021, AS-DNA-EN, Edition 07.2021. The superordinate transmission network with higher nominal voltage is not taken into account, i.e. no interactions with this network are considered.

The numerous uncertainties induced by load diversification pose great challenges regarding the planning and stable operation of the distribution network. For example, fluctuations in electricity production and consumption, e.g., strongly volatile renewable energy production or irregular charging of electric vehicles, can in turn cause fluctuations in voltages and loading of distribution assets, eventually leading to an increased risk of network failure. distribution system operators (DSOs) can stabilize the network through operational interventions, i.e. with the help of control parameters. These may include changes to the network configuration (e.g., switch positions, on load tap changers (OLTC)) as well as interventions directly into load and generation (e.g., limiting maximal charging power of EV charging points). However, the corrective compensation of network instabilities may in some cases be expensive (due to the short time horizon) and comes with technical challenges (e.g., requiring real-time connectivity of assets).

To address these challenges, DSOs need to understand, limit, and reduce the risk of critical grid states sufficiently early ahead of time (e.g., 24 hours in advance for operational planning), which allows them to choose network control actions in a timely and cost-efficient manner.

In contrast to transmission systems most distribution systems show a lack in measurement information and therefore the system state can be known and forecasted only as a probability distribution. This is especially true since the future state of the network that needs to be controlled depends on uncertain parameters (e.g., behavior of customers, solar irradiance). Hence, this uncertainty needs first to be acknowledged and quantified. On the other hand, it is not required for grid operation to realize specific setpoints for power and voltage at given grid buses, but only to keep the state variable in a stable and save operating regime. Decision support thus needs to take into account the uncertainties mentioned above in order to meet that objective.

Up to now, the problem of reducing the likelihood of critical system states has primarily been the focus of network design and planning problems. Network planning, e.g., may be based on the formulation of an optimization problem with respect to power flow, with user-defined objectives (e.g., minimization of operation cost), configuration boundary conditions (e.g., network topology, renewable energy availability), and constraints (e.g., frequency and voltage safety boundaries). The optimization problem may be additionally complemented with reliability constraints (e.g., upper limit of inadequate energy supply, N-1 reliability constraints) and may be based on exemplary "worst case" load cases or may use a stochastic optimization approach to cover a larger set of scenarios. The solution to this optimization problem yields an optimal network configuration. In most cases, the planning of power distribution networks does not consider the impact of uncertainties due to load diversification. In the limited cases where uncertainty is considered, this concerns either a set of pertinent scenarios or worst-case analyses.

Furthermore, to address the problem described above, the adjustment of control parameters in operation, however, the mentioned approach cannot immediately be adapted: The required geographical resolution is much higher and the variability of scenarios that need to be considered is much larger. This makes a stochastic optimization approach as described above computationally infeasible given the limited amount of time available to decide if any interventions are required.

Instead, to reduce the risk of critical grid states in operation, DSOs often use pre-configured rule-based local control schemes (e.g., VoltVar control of solar PV, automatic operation of OLTCs). Furthermore, many interventions are initiated manually by operators, based on their experience and/or custom operation manuals. These schemes are very limited in their flexibility to react to changing situations in the grid and rely on expertise and experience of individual members of a DSOs staff, which makes it prone to suboptimal and inconsistent decisions, particularly in case of fluctuation and/or scarcity of qualified employees.

The document EP4312329A1 discloses a method for controlling an electrical power network using a control unit. The method involves providing an a priori distribution for state variables of the power network, providing a measurement distribution of measured variables for a given network state, forming an a posteriori distribution for the state variables using the a priori distribution and measurement distribution, determining a probability for a critical state for at least one network node using the marginal distribution derived from the a posteriori distribution, and performing network-serving and/or system-serving measures when the determined probability is greater than or equal to a specified threshold value. The method utilizes probabilistic approaches, particularly Bayesian methods, to handle uncertainties in grid optimization. The control unit reacts with control interventions and/or regulatory interventions based on the probability of critical states at network nodes.

The document DE102023203985B3 discloses a method for generating input data for state estimation of a power grid. The method involves classifying medium-voltage nodes into four categories based on the availability of real-time measurements and smart meter penetration rates in their associated low-voltage networks. For medium-voltage nodes with low smart meter penetration rates, the method uses a pre-determined covariance value that depends on the number of households in the respective low-voltage networks to establish covariances between aggregated electrical powers at the medium-voltage nodes. This approach addresses the challenge of determining realistic correlations or covariances for medium-voltage nodes with insufficient smart meter data.

Based on the known computer-implemented method for network analysis, the present invention addresses the challenge of providing a computer-implemented method that enables optimization of an electric power distribution network while accounting for uncertainties in load and generation forecasts.

The invention solves this problem through a method according to claim 1.

The following paragraphs elaborate on definitions for the technical terms used in the claim set and in the whole application. The definitions should not be understood and limiting to the disclosure, but rather as hinting on some ways of understanding implementations of the invention while not excluding interpretations not mentioned in the definitions. Accordingly, other implementations are within the scope of the following paragraphs.

Electric power distribution network: As used herein, an "electric power distribution network" refers to the portion of an electrical power system that delivers electricity from the transmission system to end users. It typically includes medium-voltage (1kV to 69kV) and low-voltage (less than 1kV) power lines, distribution transformers, switchgear, and other control equipment. The network may incorporate distributed energy resources such as solar photovoltaic systems, wind turbines, energy storage devices, and electric vehicle charging stations. The electric power distribution network is responsible for stepping down high transmission voltages to lower voltages suitable for customer use and distributing power to residential, commercial, and small industrial consumers over a defined geographic area.

Module: Any module may be implemented as a software module, e.g. an individual procedure as part of a larger software, installed on a server or cloud infrastructure. All modules can be part of the same software or distributed over different software packages. A module could also be implemented in hardware/firmware as part of a computer system comprising a processor, memory, and data storage.

Probability module: A component that applies probabilistic modeling techniques to generate forecasts of network parameters.

Probabilistic load and feed-in forecast: A prediction of future electricity demand (load) and/or generation (feed-in) that accounts for uncertainties by representing values as probability distributions rather than single point estimates. This forecast serves as input to subsequent analysis steps. It can be provided by a third party and transmitted via data-communication to the probability module. Alternatively, it can be provided by a forecast module that analyses loads, generation and/or weather data.

Grid model: A simplified mathematical representation of the power network that approximates nonlinear power flow equations with linear relationships. This allows for faster computation while maintaining reasonable accuracy for many applications. Preferably, the grid model can be a linearized grid model.

Probabilistic state parameter forecast: A prediction of future network state variables (e.g. voltages, currents) represented as probability distributions to account for uncertainties. This is generated by applying the probabilistic load/feed-in forecast to the linearized grid model.

Reliability module: A component that analyzes the probabilistic state parameter forecast to assess the likelihood of network failures or constraint violations. A network failure can for example be a violation of allowable voltage levels at any node in the electrical grid, e.g. when the calculated voltage deviates from the nominal voltage by more than +/- 10 %.

Failure probability: The likelihood that network parameters will violate operational constraints or limits, potentially leading to outages or equipment damage. This is calculated by the reliability module based on the probabilistic forecasts.

Control module: A software component that determines optimal settings for controllable network elements to achieve operational objectives. This module takes the failure probability as input and outputs control parameter values.

Control parameters: Adjustable settings of network devices that can be modified to influence power flow and voltage levels. Examples include transformer tap positions, capacitor bank settings, and controllable load/generation setpoints.

Operational objective: The goal or target that the control module aims to achieve through optimization. This may include minimizing failure probability, reducing losses, or balancing voltage levels across the network.

The output of each module can serve as input to the next module in the processing chain. For example, the probabilistic state parameter forecast generated by the probability module can sent as a digital data telegram to the reliability module via a communication interface. Various data communication methods may be used, in particular if the modules are not arranged in a single software or computer system, including wired (e.g. Ethernet, power-line communication) and wireless (e.g. 5G, 4G, long-range radio) technologies.

Day-ahead forecast: As used herein, the term "day-ahead forecast" refers to a prediction of future conditions in an electric power distribution network for the upcoming 24-hour period. This type of forecast is a typical requirement for planning done by distribution grid utilities. It encompasses a projection of expected electricity load and generation (feed-in) at various points in the network, typically generated for each hour of the following day. The forecast is used as input for optimizing control parameters and operational planning of the electric power distribution network in advance of real-time operations.

The invention as described in claim 1 offers several significant advantages over previous solutions:

1. Comprehensive uncertainty handling: By applying a probabilistic load and feed-in forecast to a linearized grid model, the method accounts for the inherent uncertainties in power distribution networks. This approach provides a more realistic representation of network behavior compared to deterministic methods, especially given the increasing integration of distributed energy resources and variable loads.

2. Improved risk assessment: The reliability analysis performed on the probabilistic state parameter forecast allows for a more accurate determination of failure probability. This enables network operators to better understand and quantify the risks associated with different network states, leading to more informed decision-making.

3. Proactive optimization: By optimizing control parameters based on the calculated failure probability, the method allows for preemptive actions to maintain network stability. This proactive approach can help prevent potential failures or constraint violations before they occur, improving overall network reliability. The main application of the inventive method is to provide an improved day-ahead forecast for a utility company running a distribution grid.

The inventive method could also be applied to determine a forecast for a longer time period into the future, e.g. a couple of days up to a week. However, as load and in-feed (which are dependent on the accuracy of the weather report for renewables) projections become increasingly more insecure going beyond the one day time horizon, the applicability of the method has to be verified by simulation or comparison with real measurement data taken at later time.

With the inventive method, the forecast could also be updated for a shorter time interval as 24 hours, but as it approaches real-time operation, uncertainty also increases due to interference with short-time control measures.

4. Flexibility and adaptability: The method's modular structure, comprising probability, reliability, and control modules, allows for easy updates and improvements to individual components. This flexibility enables the system to adapt to new technologies, changing network conditions, and evolving operational requirements.

5. Cost-effective operation: By optimizing control parameters to achieve operational objectives, the method can help reduce operational costs. This may include minimizing power losses, reducing the need for manual interventions, and extending the lifespan of network components by operating them within optimal ranges.

6. Enhanced integration of renewable energy sources: The probabilistic approach is particularly well-suited for handling the variability associated with renewable energy generation. This can facilitate better integration of distributed energy resources into the power distribution network, supporting the transition to cleaner energy systems.

7. Scalability: The use of a linearized grid model allows for efficient computation, making the method applicable to large-scale distribution networks with numerous nodes and complex topologies.

8. Improved operational planning: By providing a more accurate forecast of network states and potential issues, the method enables better day-ahead planning for network operations. This can lead to more efficient resource allocation and improved overall network management.

9. Reduced reliance on expert knowledge: The automated optimization process reduces the dependence on individual operator expertise for network management decisions. This can lead to more consistent and objective decision-making across different operational scenarios.

10. Data-driven decision making: By leveraging historical data and advanced forecasting techniques, the method promotes a data-driven approach to network optimization. This can lead to continuous improvement in network performance as more data becomes available over time, e.g. when more measurement devices are installed in a distribution grid.

These advantages collectively contribute to a more reliable, efficient, and cost-effective operation of electric power distribution networks, addressing the growing challenges posed by the increasing complexity and variability in modern power systems.

The following paragraphs highlight alternative applications of the inventive method beyond optimization of an electrical distribution grid.

Smart City Energy Management

The probabilistic optimization method could be applied to smart city energy management systems. By considering the uncertainties in energy consumption patterns across various urban infrastructures (e.g., buildings, transportation systems, public lighting), city planners could optimize the distribution of energy resources more efficiently. This would help balance the load on the grid, reduce the likelihood of blackouts during peak times, and potentially lower energy costs for the city and its residents.

Renewable Energy Integration in Microgrids

The invention could be particularly useful for optimizing the integration of renewable energy sources in microgrids. These localized power systems, often used in remote areas or for specific facilities like hospitals or university campuses, face significant challenges due to the intermittent nature of renewable sources. The probabilistic approach could help microgrid operators better predict and manage the variability of solar and wind power, ensuring stable power supply and reducing reliance on backup fossil fuel generators.

Electric Vehicle Charging Infrastructure Planning

As electric vehicle (EV) adoption increases, the strain on power distribution networks from charging stations is becoming a significant concern. This invention could be applied to optimize the planning and operation of EV charging infrastructure. By modeling the probabilistic nature of EV charging patterns and integrating this with other grid demands, network operators could more effectively plan the placement and capacity of charging stations while minimizing the risk of grid instability.

Data Center Power Management

Large-scale data centers require enormous amounts of electricity and have complex, variable power demands. Applying this probabilistic optimization method to data center power management could help operators better predict and manage their energy needs. This could lead to more efficient use of power resources, reduced risk of outages, and potentially significant cost savings in an industry where energy costs are a major operational expense.

Agricultural Irrigation Systems

In modern agriculture, large-scale irrigation systems can place significant demands on local power grids, especially in rural areas. The invention could be applied to optimize the power distribution for these systems, taking into account uncertainties such as weather patterns, crop water needs, and energy prices. This could help farmers reduce energy costs, ensure reliable power for critical irrigation periods, and contribute to more sustainable agricultural practices.

Hospital Energy Management

Hospitals require a constant, reliable power supply for critical medical equipment and operations. The probabilistic optimization method could be applied to hospital energy management systems to better predict and manage power needs across different departments and equipment types. This could help ensure uninterrupted power supply to critical areas, optimize the use of backup generators, and potentially reduce overall energy costs without compromising patient care.

Industrial Process Optimization

In manufacturing and process industries, energy consumption can vary significantly based on production schedules, equipment usage, and other factors. Applying this invention to industrial energy management could help optimize power distribution across different processes and equipment. This could lead to more efficient energy use, reduced risk of production disruptions due to power issues, and potentially significant cost savings in energy-intensive industries.

Smart Home Energy Management Systems

On a smaller scale, the probabilistic optimization method could be integrated into smart home energy management systems. By considering uncertainties in household energy consumption patterns, renewable energy generation (e.g., rooftop solar), and energy storage systems, these systems could more effectively manage power distribution within the home. This could lead to reduced energy costs for homeowners, better integration of home renewable energy systems, and improved overall grid stability as more homes adopt smart energy management.

In a further preferred embodiment of the inventive computer-implemented method, the state parameter contains at least one of the following parameters: voltages, current through lines, power limits of transformers, other state parameters that are relevant for operational limits of components. This embodiment provides flexibility in choosing the most relevant state parameter for a given network configuration. Voltages are particularly important for maintaining power quality and preventing equipment damage. Currents through lines are crucial for avoiding overloading and ensuring efficient power transfer. Power limits of transformers are critical for preventing overheating and extending equipment lifespan. Other state parameters relevant for operational limits of components allow for a more comprehensive assessment of the network's health. Alternative implementations could include using multiple state parameters simultaneously or dynamically selecting the most critical parameter based on network conditions.

In a further preferred embodiment of the inventive computer-implemented method, the operational takes into account at least one of the following aspects: failure probability, costs associated with failures, compensation of customers for non-availability of services and/or assets, technician deployments. This approach allows for a more holistic optimization that considers both technical and economic factors. Minimizing failure probability directly improves network reliability. Considering costs associated with failures helps balance reliability improvements against financial constraints. Including compensation for service interruptions incentivizes maintaining high service quality. Accounting for technician deployments can lead to more efficient resource allocation. Alternative implementations could involve weighted combinations of these aspects or additional factors such as environmental impact or long-term infrastructure planning.

In a further preferred embodiment of the inventive computer-implemented method, the optimized control parameters are used to control the electric power distribution network by sending control signals to at least one of the following controllable devices: on-load tap changer settings for transformers, switch positions of switchgear, controllable loads, controllable generators, capacitor banks settings, flexibility of load and/or generation at connected distributed energy resources. This embodiment enables direct implementation of the optimization results. On-load tap changers allow for voltage regulation without service interruption. Switchgear control enables network reconfiguration for load balancing. Controllable loads and generators provide flexibility in managing supply and demand. Capacitor banks help with reactive power compensation and voltage support. Leveraging flexibility from distributed energy resources enhances overall system adaptability. Alternative implementations could include hierarchical control schemes or integration with advanced distribution management systems.

In a further preferred embodiment of the inventive computer-implemented method, the control signals are directly sent to the controllable devices by a power distribution network utility. This approach allows for centralized control and rapid implementation of optimization results. It ensures consistency in control actions across the network and enables a timely response to changing conditions. The utility can maintain direct oversight of network operations and quickly address any issues that arise. Alternative implementations could involve a hybrid approach with some control signals sent directly by the utility and others managed by local controllers or aggregators.

In a further preferred embodiment of the inventive computer-implemented method, the control signals are used by a controllable asset aggregator, the aggregator being an intermediary that provides generation and/or load flexibility to the power distribution network, to generate adjusted control parameters which are sent to the controllable devices. This embodiment leverages the expertise of specialized aggregators to manage diverse assets efficiently. Aggregators can optimize across multiple devices or customers, potentially achieving better overall results. They can also handle complex contractual arrangements and market participation on behalf of individual asset owners. This approach can facilitate the integration of a larger number of small-scale distributed energy resources. Alternative implementations could involve multiple competing aggregators or a combination of direct utility control and aggregator-managed assets.

In a further preferred embodiment of the inventive computer-implemented method, the probabilistic load and feed-in forecast is generated, by a forecast module, for each customer or service delivery point using at least one of the following data: historical smart meter measurements, weather forecast data. A customer or service delivery point is, for example, a grid connection point for a single household. In other words, it is one of the many nodes of the distribution grid. This granular approach allows for more accurate predictions of network behavior. Historical smart meter data captures individual consumption patterns and trends. Weather forecast data is crucial for predicting renewable energy generation and temperature-dependent loads. By forecasting at the customer or service delivery point level, the method can account for localized variations and better anticipate potential issues. Alternative implementations could incorporate additional data sources such as socioeconomic indicators, holiday schedules, or local event calendars to further refine forecasts.

In a further preferred embodiment of the inventive computer-implemented method, the probabilistic load and feed-in forecast is generated using a Gaussian mixture model. This statistical approach allows for the representation of complex, multi-modal distributions that often characterize load and generation patterns. Gaussian mixture models can capture different modes of behavior (e.g., weekday vs. weekend patterns) and account for uncertainties in a flexible manner. They provide a good balance between model complexity and interpretability.

In a further preferred embodiment of the inventive computer-implemented method, the reliability analysis comprises integrating the probabilistic voltage forecast over regions outside of normal operating conditions. This approach directly quantifies the likelihood of voltage violations, providing a clear measure of network reliability. By focusing on regions outside normal operating conditions, the method prioritizes the most critical aspects of network performance. The integration process accounts for the full probability distribution, not just point estimates or worst-case scenarios. Alternative implementations could consider multiple state parameters simultaneously or use more sophisticated reliability metrics that account for the severity and duration of potential violations.

In a further preferred embodiment of the inventive computer-implemented method, optimizing the control parameters comprises formulating and solving an optimal power flow problem. The power flow problem ca be stated, in some embodiments, to minimize a failure probability. This approach directly links the optimization objective to network reliability. By minimizing failure probability, the method seeks to find the most robust network configuration. The optimal power flow formulation ensures that physical constraints of the network are respected while searching for the best solution. Alternative implementations could explore multi-objective optimization approaches that balance reliability with other factors such as operational costs or environmental impact. Advanced optimization techniques like stochastic programming or robust optimization could be employed to handle uncertainties more explicitly in the optimization process.

In a further preferred embodiment of the inventive computer-implemented method, a linearized grid model is used by the probability module. A linearized grid model is preferred because is is computationally easier to calculate. Alternatively, a Monte-Carlo-simulation with a non-linear grid model could be applied. This would require doing criticality analysis and reading off the variances of the state variables (e.g. voltage magnitude) and then doing a deterministic non-linear OPF with constraints tightened by the variances.

Based on known arrangements for network analysis, the invention further addresses the challenge of providing an arrangement that enables optimization of an electric power distribution network while accounting for uncertainties in load and generation forecasts.

The invention solves this problem through a system according to claim 12. Preferred embodiments result from the dependent claims 13 to 15, whereby the same advantages as initially explained for the inventive computer-implemented method apply analogously.

Based on known computer program products for network analysis, the invention further addresses the challenge of providing a computer program product that enables optimization of an electric power distribution network while accounting for uncertainties in load and generation forecasts.

The invention solves this problem through a computer program product according to claim 16. The same advantages as initially explained for the inventive computer-implemented method apply analogously.

To elaborate further on the technical details of the invention, an example embodiment is described below.

The innovation offers a method and a corresponding software tool for day-ahead optimization of a distribution network under the influence of uncertainties. The optimization may take advantage of various control parameters which might include switch positions, OLTCs, capacity banks and in particular flexibility of load and/or generation at connected DERs. Instead of a simulation with fixed feed-in power and loads and/or worst-case scenarios, the power flow optimization problem is restructured such that the objective is to minimize the probability of network failures. The methodology consists of the following components:

1. A power flow model $m(.)$.

2. Categorization of model parameters into (a) deterministic, (b) random, and (c) control parameters. The deterministic parameters are assumed to be known. The random parameters, r, are inherently uncertain and cannot be controlled by the operator. The control parameters, c, are used by the operator to stabilize the network's states in the case where an instability occurs. The power flow model can then be written as $m(r,c)$ and the network states are then given as $s = m(r,c)$.

3. Probabilistic modeling of the random model parameters **r,** typically in the form of probability distributions. These random parameters typically include (among others) electricity load per customer, generation of PV installations, activity of heat pumps, charging power of EV chargers. The probabilistic modeling can be based on expert knowledge or on available data sets (e.g., historical smart meter values, load forecasts, historical/forecast weather data with respect to solar radiation or wind power, charging patterns, etc.)

4. Approximation of the distribution network's system state parameters (e.g., voltage values), using the model $m(.)$ and the uncertain parameters **r**. This step assumes that the control parameters c remain fixed. This step is conducted via a transformation of the probability distribution of **r** via a linearized power flow model (see attached technical document for details).

5. The results of this step will be a parametrized distribution (e.g., Gaussian) of the network's states.

6. Computation of probability that critical (failure) states occur. For each network node, the probability of observing a state outside of normal operating conditions is calculated, e.g., by integrating the probability distribution derived above over the regions outside of normal operating conditions. The failure probability is denoted as *PF(m(r,c)) = PF(r,c)*. Similar to (3), this step assumes that the control parameters remain fixed.

7. Formulation and solution of an optimal flow problem that seeks to minimize the failure probability as computed in (5). In this step, the *control parameters* are the ones that are optimized such that the failure probabilities resulting from the impact of the *random parameters* are minimized. Then, the optimal configuration of the distribution network is the one corresponding to the minimum probability of a failure occurrence. In an abstract form, the optimization problem reads: Find *c* such that *PF(r,c)* is minimized. Essentially, the minimization problem engulfs the failure probability estimation performed in (5), which is repeated for each update of the control parameters *c* (see attached technical document for details on an exemplary definition of the optimization problem).

This example embodiment is explained in further mathematical detail in the following model description.

The probabilistic stabilization of the distribution grid has this objective: Based on day-ahead forecasts for uncertain grid states the optimal grid configuration (e.g., optimal curtailments) that prevents critical grid states should be determined.

Modeling

Customers in the grid are modeled as a vector of

- uncontrollable loads **d** and
- controllable loads **u.**

(passive-sign convention: loads are positive kW-values, generation negative)

This results in the nodal load vector

$$\mathbf{s} = C_d \mathbf{d} + C_u \mathbf{u}$$

where $C_d$ and $C_u$ are connection matrices ($C_{d,ij} = 1$ if controllable load $j$ is connected to node $i$ and 0 otherwise). Splitting into active and reactive power

$$\mathbf{p} = C_d \mathbf{d}_r + C_u \mathbf{u}_r$$

$$\mathbf{q} = C_d \mathbf{d}_i + C_u \mathbf{u}_i$$

with the same connection matrices $C$.

LinDist model

The behaviour of the state variable, such as voltage and power flows in the grid, can be modeled using the linearized bus branch model with bus injections (at all non-slack busses in a radials system)

$$p, q \in \mathrm{R}^N \text{ and } w \in \mathrm{R}^N$$

and (squared voltage magnitude

$$w_n = |V_n|^2.$$

["LinDist", Kekatos]. The squared voltages and the power flows through the line are given by

$$\mathbf{w} = w_0\mathbf{1} + 2R\mathbf{p} + 2X\mathbf{q} \qquad (1)$$

$$\mathbf{P} = F^T\mathbf{p} \qquad (2)$$

$$\mathbf{Q} = F^T\mathbf{q} \qquad (3)$$

where

$$R = F\operatorname{diag}(r)F^T \qquad (4)$$

$$X = F\operatorname{diag}(x)F^T \qquad (5)$$

and where $F = A^{-1}$ is the inverse of the reduced branch incidence matrix.

Probabilistic forecast for uncontrollable and controllable loads and nodal injections

A day-ahead forecast for the load at each node in the grid is necessary to understand the criticality of the grid. The forecast must include a quantification of uncertainty. This day-ahead forecast includes individual forecasts for each DER and the residual customer loads. Since the process is repeated for each time step one needs a forecast for the customer (household & commercial) power profiles:

A household load forecast (e.g., based on historical average and standard deviation) together with a
PV generation forecast (based on an irradiance forecast) plus
A forecast for electrcial charging processes

Probability distribution for controllable and uncontrollable loads
The forecast is needed for each controllable and each uncontrollable load.
The forecasted 'background' distribution is assumed to be (well-approximated by) a Gaussian:

$$\varrho_{u,d,\mathrm{BC}}(u_{0,r}, u_{0,i}, d_{0,r}, d_{0,i}) = N((u_{0,r}, u_{0,i}, d_r, d_i)|(\mu_{u_{0,r}}, \mu_{u_{0,i}}, \mu_{d_r}, \mu_{d_i}), \Sigma_{u,d})$$

where' $u_0$ are the values of the controllable loads if no control measures are activated. We assume that curtailing leads to a shift in the expectation of $u$. ⁻ Thus, the background distribution for the curtailed loads

$$u = u_0 - \Delta u$$

is

$$\varrho_{u,d,\mathrm{BC}}^{\mathrm{ctrld}}(u_r, u_i, d_{0,r}, d_{0,i}) = N((u_r, u_i, d_r, d_i)|(\mu_{u_{0,r}} - \Delta u_r, \mu_{u_{0,i}} - \Delta u_i, \mu_{d_r}, \mu_{d_i}), \Sigma_{u,d})$$

with expectation

$$\mu_u = \mu_{u_0} - \Delta u.$$

It is assumed that the variance $\Sigma_{u,d}$ does not change significantly when loads are curtailed. This is a conservative approximation since it overestimates the uncertainty.

Probability distribution for nodal injections

The nodal loads are

$$
\begin{pmatrix} p \\ q \end{pmatrix} = \begin{pmatrix} C_u & 0 & C_d & 0 \\ 0 & C_u & 0 & C_d \end{pmatrix} \begin{pmatrix} u_r \\ u_i \\ d_r \\ d_i \end{pmatrix} = C_{ud} \begin{pmatrix} u_r \\ u_i \\ d_r \\ d_i \end{pmatrix}
$$

The distribution for the nodal loads p, q, is

$$
\varrho_{p,q,\mathrm{BC}} = N((p,q)|(\mu_p,\mu_p), \Sigma_{pq})
$$

with

$$
\begin{pmatrix} \mu_p \\ \mu_q \end{pmatrix} = C_{ud} \begin{pmatrix} \mu_{u_r} \\ \mu_{u_i} \\ \mu_{d_r} \\ \mu_{d_i} \end{pmatrix}
$$

and

$$
\Sigma_{pq} = C_{ud}\Sigma_{ud}C_{ud}^T \tag{6}
$$

State distribution (Prior distribution)

$$
\mathbf{w} = w_0\mathbf{1} + \begin{pmatrix} 2R & 0 \\ 0 & 2X \end{pmatrix} \begin{pmatrix} p \\ q \end{pmatrix} = w_0\mathbf{1} + M_{RX} \begin{pmatrix} p \\ q \end{pmatrix}
$$

Where

$$
M_{RX} = \begin{pmatrix} 2R & 0 \\ 0 & 2X \end{pmatrix}
$$

The (prior) distribution of the state variables p, q $\in$ R$^N$ and w $\in$ R$^N$ is obtained from the distribution of the nodal injections

$$
\varrho_w(w) = N(w|\mu_w, \Sigma_w) \tag{7}
$$

$$
\varrho_P(P) = N(P|\mu_P, \Sigma_P) \tag{8}
$$

$$
\varrho_Q(Q) = N(Q|\mu_Q, \Sigma_Q) \tag{9}
$$

with

$$\mu_w = w_0 \mathbf{1} + 2R\mu_p + 2X\mu_q \tag{10}$$

$$\mu_P = F^T \mu_p \tag{11}$$

$$\mu_Q = F^T \mu_q \tag{12}$$

and

$$\Sigma_w = M_{RX}\Sigma_{pq} \tag{13}$$

$$\Sigma_P = (F^T \quad 0)\,\Sigma_{pq}\begin{pmatrix}F\\0\end{pmatrix} \tag{14}$$

$$\Sigma_Q = (0 \quad F^T)\,\Sigma_{pq}\begin{pmatrix}0\\F\end{pmatrix} \tag{15}$$

Optimal (preventive) DER-re-dispatch

The objective is to guarantee the observation of safety limits with a given probability, e.g., 99.7%. For a gaussian probability model the target safety probability can be converted into distances of the mean of the state distributions from the limit in terms of variances. E.g., a target safety probability of 99.7% is achieved when the means of all marginalized distributions are $3\Sigma$ away from their limits.

Explicit optimization problem for the LinDist model

Variables: Actor degrees of freedom in
Objective: Minimal intervention (minimal load management, minimal PV curtailment)
Linear boundary conditions: Ensure that marginalized distributions are away from limits Optimization problem

$$\min_{\Delta u} |\Delta u|^2 \tag{16}$$

$$s.t. \tag{17}$$

$$\underline{w}_n + 3\Sigma_{w,nn} \le \mu_{w,n} \le \overline{w}_n \quad 3\Sigma_{w,nn} \text{ for all nodes } n = 1, ..., N \tag{18}$$

$$\underline{P}_n + 3\Sigma_{P,nn} \le \mu_{P,n} \le \overline{P}_n - 3\Sigma_{P,nn} \text{ for all lines } n = 1, ..., N \tag{19}$$

$$\underline{Q}_n + 3\Sigma_{Q,nn} \le \mu_{Q,n} \le \overline{Q}_n - 3\Sigma_{Q,nn} \text{ for all lines } n = 1, ..., N \tag{20}$$

and with, e.g.,

$$\mu_w = w_0 1 + M_{RX} \begin{pmatrix} \mu_p \\ \mu_q \end{pmatrix} = w_0 1 + M_{RX} C_{ud} \begin{pmatrix} \mu_{u_{0,r}-\Delta u_r} \\ \mu_{u_{0,i}-\Delta u_i} \\ \mu_{d_r} \\ \mu_{d_i} \end{pmatrix} \tag{21}$$

The optimization problem in this model formulation is linear and can be solved efficiently for large grid instances.

Appendix

Probability distribution of Affine linear transformation:
For

$$x \sim N(\mu_x, \Sigma_x)$$

and

$$y = Ax + b$$

the transformed variable has probability density

$$y \sim N(\mu_y, \Sigma_y)$$

with

$$\mu_y = A\mu_x \text{ and } \Sigma_y = A\Sigma_x A^T$$

.

The main innovation consists of a reliability-based network optimization method and software tool, which aims to minimize failure events. Its main differences to the current state-of-the-art are:

- Acknowledges the presence of uncertainties in grid optimization.

- Quantifies the impact of uncertainty in the form of failure probability or violations of operating limits.

- Optimizes the grid configuration such that failures or violations of operating limits are mostly, if not entirely, avoided.

- Avoids redundancies introduced by worst-case analyses, which typically result in too conservative network configurations, thus, to unrequired costs.

- Essentially, the methodology performs a *predictive and prescriptive* grid stabilization instead of a *corrective* one, in the sense that the resulting network configuration is the one most resistant to instabilities.

- The predictive stabilization reduces the number of network instabilities and failures and thus avoids costly grid reinforcements.

Non-limiting and non-exhaustive examples are described with reference to the following figures.
For better explanation of the invention, the following schematic representations show:

Figure 1 a flowchart of an inventive method for optimizing an electric power distribution network, and

Figure 2 an overview of an electric power distribution network.

The following description sets forth exemplary aspects of the present disclosure. It should be recognized, however, that such description is not intended as a limitation on the scope of the present disclosure. Rather, the description also encompasses combinations and modifications to those exemplary aspects described herein.

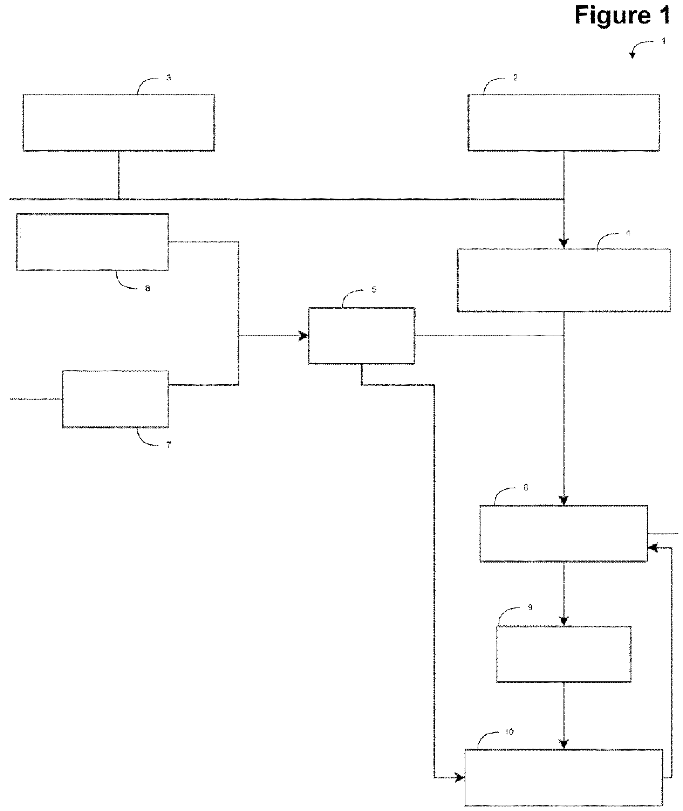

Figure 1 illustrates a flowchart of inventive method 1 for optimizing an electric power distribution network. The method comprises several interconnected steps that process data and generate optimized control parameters.

The method begins with historical smart meter measurements 3 and a Weather forecast 2 that are being delivered to step 4, which generates a probabilistic load/feed-in forecast for each customer.

Additionally, historical load/voltage measurements 6 or alternatively a grid model 7 are fed into a linearized grid model 5. The linearized grid model 5 is, together with the probabilistic load/feed-in forecast from step 4, provided as input to step 8 to generate a probabilistic voltage forecast 8 (or a forecast for any other state parameter other than voltage at each node of the grid).

The output from the probabilistic voltage forecast 8 is passed to step 9 for a reliability / criticality analysis. Here the likelihood of network failures or constraint violations based on the probabilistic voltage predictions is assessed.

Finally, the results of the reliability analysis 9, together with the linearized grid model 5, are used in an optimization step 10. This module determines the optimal control parameters to guarantee the observation of operational limits with at least a given probability to avoid network failures while meeting operational objectives.

The output of the optimization step 10 is fed back into the probabilistic voltage forecast step 8. It could be considered, in some embodiments, together with updated forecasts etc. for a future refinement. This allows for continuous refinement of the optimization process based on updated forecasts and network conditions.

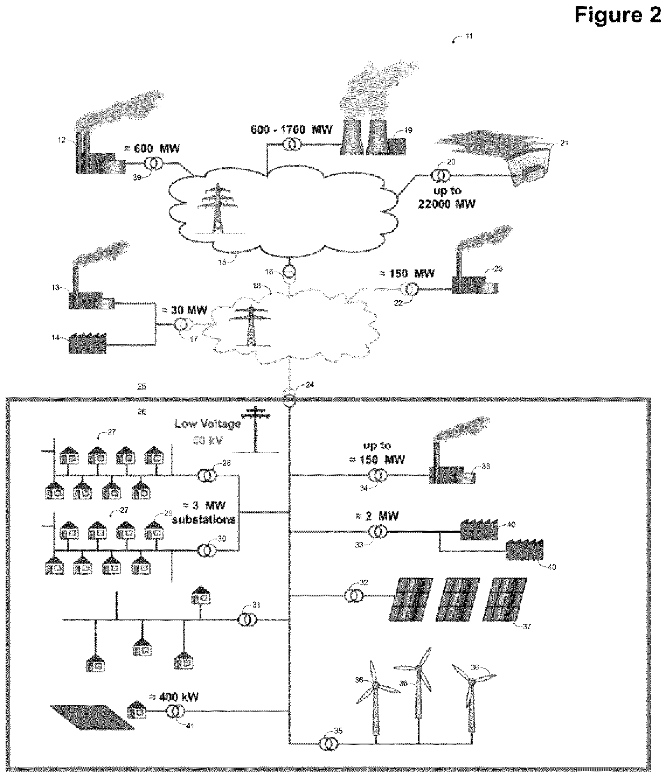

Figure 2 (source: Wikipedia, modified) provides an overview of an electric power distribution 11, illustrating the various components and power flow from generation to end-users.

The diagram shows multiple power generation sources, including a coal power plant 12 (generating approximately 600 MW), an industrial power plant 13 (ca. 30 MW) and associated factory 14, a nuclear power plant 19 (600MW-1700 MW), a hydro-electric plant (up to 22000 MW) and a medium-sized power plant 23 (around 150 MW).

The upper portion of figure 1 highlights the structure of a typical transmission grid 25.

The power plants 10,12,21 feed into a an extra high voltage network 15 (265kV-275kV,mostly AC, some HCDC) via transformers 19,20,21,39. The extra high voltage transmission network 15 is connected via step-down transformer 16 to a high voltage network 18 with 110kV nominal voltage (or above).

The industrial power plant 13 and the associated factory 14 as well as the medium-sized power plant 23 are connected to the high voltage network 18 via transformers 17,22.

The transmission grid 25 is connected to the distribution grid 26 (encapsulated with a rectangle) by transformer 24 which connects the high voltage network 18 to consumers such as residential areas 27 with single homes 29 via transformers 28,30,31,41. In the distribution grid 26 are also renewable energy resources, including wind power turbines 36, and solar panels 37 connected to the grid via transformers 32,35.

Additional transformers 33,35 are used to connect to industrial consumers 40 and a city power plant 38 with up to 150 MW power generation capacity.

List of element labels used in the two figures. The format is:

| Element Label # | Description | Figure # |

| 1 | flowchart of inventive method | Figure 1 |
| 2 | Weather forecast | Figure 1 |
| 3 | historical smart meter measurements | Figure 1 |
| 4 | probabilistic load/feed-in forecast per customer | Figure 1 |
| 5 | linearized grid model | Figure 1 |
| 6 | historical load/voltage measurements | Figure 1 |
| 7 | grid model | Figure 1 |
| 8 | probabilistic voltage forecast | Figure 1 |
| 9 | reliability analysis | Figure 1 |
| 10 | Optimization | Figure 1 |
| 11 | Overview of electric power distribution network | Figure 2 |
| 12 | coal power plant | Figure 2 |
| 13 | industrial power plant | Figure 2 |
| 14 | industrial facility/factory | Figure 2 |
| 15 | extra high-voltage grid, 265 to 275 kV (mostly AC, some HVDC) | Figure 2 |
| 16 | transformer | Figure 2 |
| 17 | transformer | Figure 2 |

| 18 | High voltage, 110kV and up | Figure 2 |
| 19 | nuclear power plant | Figure 2 |
| 20 | transformer | Figure 2 |
| 21 | hydro-electric plant | Figure 2 |
| 22 | transformer | Figure 2 |
| 23 | medium sized power plant | Figure 2 |
| 24 | transformer | Figure 2 |
| 25 | transmission grid | Figure 2 |
| 26 | distribution grid | Figure 2 |
| 27 | residential area | Figure 2 |
| 28 | transformer | Figure 2 |
| 29 | single home | Figure 2 |
| 30 | transformer | Figure 2 |
| 31 | transformer | Figure 2 |
| 32 | transformer | Figure 2 |
| 33 | transformer | Figure 2 |
| 34 | transformer | Figure 2 |
| 35 | transformer | Figure 2 |
| 36 | wind power turbines | Figure 2 |
| 37 | solar panels | Figure 2 |
| 38 | power transmission tower | Figure 2 |
| 39 | transformer | Figure 2 |
| 40 | industrial customers | Figure 2 |

**Claims**

1.  A computer-implemented method for optimizing an electric power distribution network (26), **characterized in that** the method comprises:

    applying, by a probability module, a probabilistic load and feed-in forecast (4) to a grid model (5) to generate a probabilistic state parameter forecast (8), and
    performing, by a reliability module, a reliability analysis (9) on the probabilistic state parameter forecast (8) to determine a failure probability, and
    optimizing (10), by a control module, values for the control parameters of the electric power distribution network to achieve an operational objective.

2.  The computer-implemented method of claim 1, wherein the state parameter contains at least one of the following parameters: voltages, current through lines, power limits of transformers, other state parameters that are relevant for operational limits of components.

3.  The computer-implemented method of claim 1 or 2, wherein achieving the operational objective takes into account at least one of the following aspects: failure probability, costs associated with failures, compensation of customers for non-availability of services and/or assets, technician deployments.

4.  The computer-implemented method of one of the preceding claims, wherein the optimized control parameters are used to control the electric power distribution network by sending control signals to at least one of the following controllable devices: on-load tap changer settings for transformers (24,28,30-35,41), switch positions of switchgear, controllable loads (40), controllable generators (36,37), capacitor banks settings, flexibility of load and/or generation at connected distributed energy resources (36,37).

5.  The computer-implemented method of claim 4, wherein the control signals are directly send to the controllable devices (36,37,40) by a power distribution network utility.

6.  The computer-implemented method of claim 4, wherein the control signals are used by a controllable asset aggregator, the aggregator being an intermediary that provides generation and/or load flexibility to the power distribution network, to generate adjusted control parameters which are send to the controllable devices (36,37,40).

**7.** The computer-implemented method of one of the preceding claims, wherein the probabilistic load and feed-in forecast (4) is generated, by a forecast module, for each customer or service delivery point using at least one of the following data: historical smart meter measurements (3), weather forecast data (2).

**8.** The computer-implemented method of one of the preceding claims, wherein the probabilistic load and feed-in forecast (4) is generated using a Gaussian mixture model.

**9.** The computer-implemented method of one of the preceding claims, wherein the reliability analysis comprises integrating the probabilistic state parameter forecast (8) over regions outside of normal operating conditions.

**10.** The computer-implemented method of one of the preceding claims, wherein optimizing (10) the control parameters comprises formulating and solving an optimal power flow problem.

**11.** The computer-implemented method of one of the preceding claims, wherein a linearized grid model is used by the probability module.

**12.** A system for optimizing an electric power distribution network (26), **characterized in that** the system comprises:

a probability module configured to apply a probabilistic load and feed-in forecast (4) to a grid model (5) to generate a probabilistic state parameter forecast (8),
a reliability module configured to perform a reliability analysis (9) on the probabilistic state parameter forecast (8) to determine a failure probability, and
a control module configured to optimize (10) values for control parameters of the electric power distribution network to achieve an operational objective.

**13.** The system of claim 12, wherein the probability module is configured to use a state parameter that contains at least one of the following parameters: voltages, current through lines, power limits of transformers, other state parameters that are relevant for operational limits of components.

**14.** The system of claim 12 or 13, wherein the control module is configured to use an operational objective that takes into account at least one of the following aspects: failure probability, costs associated with failures, compensation of customers for non-availability of services and/or assets, technician deployments.

**15.** The system of one of claims 12 to 14, wherein the probability module is configured to use a probabilistic load and feed-in forecast (4) that is generated using a Gaussian mixture model.

**16.** A computer program product comprising instructions that, when executed by a computer, cause the computer to perform a method according to one of claims 1 to 10.

# Figure 1

# Figure 2

# EP 4 704 281 A1

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 057 467 A1 (UTILIDATA INC [US]) 14 September 2022 (2022-09-14) | 1-7, 9-14,16 | INV. H02J3/00 H02J3/38 H02J13/00 |
| Y | * paragraphs [0099], [0114], [0113]; figures 1,2 * * paragraphs [0033], [0021], [0070]; figure 1 * * figure 4 * * paragraph [0127]; figure 2 * * paragraph [0100]; figure 2 * * paragraphs [0071], [0102], [0100] * ----- | 8,15 | |
| Y | KEZUNOVIC MLADEN ET AL: "Big data analytics for future electricity grids", ELECTRIC POWER SYSTEMS RESEARCH, ELSEVIER, AMSTERDAM, NL, vol. 189, 13 August 2020 (2020-08-13), XP086361366, ISSN: 0378-7796, DOI: 10.1016/J.EPSR.2020.106788 [retrieved on 2020-08-13] * page 6, line 44, paragraph 3.1 * ----- | 8,15 | |
| A | RAJABI A ET AL: "Innovative approaches for assessing and enhancing the hosting capacity of PV-rich distribution networks: An Australian perspective", RENEWABLE AND SUSTAINABLE ENERGY REVIEWS, ELSEVIERS SCIENCE, NEW YORK, NY, US, vol. 161, 18 March 2022 (2022-03-18), XP087030031, ISSN: 1364-0321, DOI: 10.1016/J.RSER.2022.112365 [retrieved on 2022-03-18] * figure 6 * ----- -/-- | 1 | TECHNICAL FIELDS SEARCHED (IPC) H02J |

The present search report has been drawn up for all claims

| Place of search | Date of completion of the search | Examiner |
|---|---|---|
| Munich | 20 January 2025 | Maucher, Bastian |

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LIU MICHAEL Z ET AL: "Using OPF-Based Operating Envelopes to Facilitate Residential DER Services", IEEE TRANSACTIONS ON SMART GRID, IEEE, USA, vol. 13, no. 6, 5 July 2022 (2022-07-05), pages 4494-4504, XP011924866, ISSN: 1949-3053, DOI: 10.1109/TSG.2022.3188927 [retrieved on 2022-07-06] * figure 2 * ----- | 1 | |
| | | | **TECHNICAL FIELDS SEARCHED (IPC)** |

The present search report has been drawn up for all claims

| Place of search | Date of completion of the search | Examiner |
|---|---|---|
| Munich | 20 January 2025 | Maucher, Bastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 6663

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2025

| Patent document cited in search report | | Publication date | Patent family member(s) | | Publication date |
|---|---|---|---|---|---|
| EP 4057467 | A1 | 14-09-2022 | AU | 2022201712 A1 | 29-09-2022 |
| | | | EP | 4057467 A1 | 14-09-2022 |
| | | | JP | 2022140414 A | 26-09-2022 |
| | | | US | 2022294217 A1 | 15-09-2022 |
| | | | US | 2023187934 A1 | 15-06-2023 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4312329 A1

- DE 102023203985 B3

**Non-patent literature cited in the description**

- Intelligent control center technology - Spectrum Power. *Siemens AG 2017*

- Spectrum Power 7 v2.30 SP2 Distribution Network Applications. Siemens AG 2021. July 2021